Europäisches Patentamt

European Patent Office

Office européen des brevets

(11) Publication number: **0 525 757 A1**

# EUROPEAN PATENT APPLICATION

(21) Application number: **92112983.9**

(22) Date of filing: **30.07.92**

(51) Int. Cl.5: **F01N 3/04**, F01N 1/08

(30) Priority: **02.08.91 JP 216584/91**

(43) Date of publication of application:
**03.02.93 Bulletin 93/05**

(84) Designated Contracting States:
**DE ES FR GB IT SE**

(71) Applicant: **EBARA CORPORATION**
**11-1, Haneda Asahi-cho**
**Ohta-ku Tokyo(JP)**

(72) Inventor: **Sase, Toshitsugu**
**2253-37, Kamariya-cho, Kanazawa-ku**
**Yokohama-shi, Kanagawa-ken(JP)**
Inventor: **Matsuda, Michiaki**
**6-9-5-307, Tsurukawa**
**Machida-shi, Tokyo(JP)**
Inventor: **Yanagisawa, Kiyoshi**
**139-12-643, Kamisakunobe, Takatsu-ku**
**Kawasaki-shi, Kanagawa-ken(JP)**

(74) Representative: **Pellmann, Hans-Bernd,**
**Dipl.-Ing. et al**
**Patentanwaltsbüro Tiedtke-Bühling-Kinne &**
**Partner, Bavariaring 4**
**W-8000 München 2(DE)**

(54) **Silencer with water cooling jacket.**

(57) A compact silencer which enables both a sound absorbing effect and an exhaust gas cooling effect to be obtained within an installation space required for a conventional silencer and which can also suppress a noise transmitted through the outer wall and solid propagation noise, the silencer comprises an inner cylinder (4) having a pair of inlet and outlet pipes (5,6) which define a passage for high-temperature exhaust gas and including a sound absorbing structure in its internal structure, and an outer cylinder (1) having a pair of inlet and outlet pipes (2,3) which define a cooling water passage and surrounding the inner cylinder (4), wherein the gas passage and the cooling water passage are completely isolated from each other.

*Fig. 1*

The present invention relates to a silencer used for high-temperature exhaust gas.

Hitherto, a silencer for high-temperature exhaust gas and a gas cooler or a heat exchanger have been installed separately from each other. When equipment is to be arranged in a packaged form, for example, it is desired that it be made as compact as possible. Accordingly, an installation space is severely limited, so that it is exceedingly difficult to arrange a suitable layout.

The size of resonance and expansion silencers must be increased as the wavelength of noise to be absorbed becomes longer. The wavelength is expressed by

$$\lambda = c/f$$

where

$\lambda$: wavelength (m)
c: sound velocity (m/S)
f: frequency (Hz)

The sound velocity in a gas is expressed by

$$c = 331.5 \sqrt{1 + \alpha t}$$

where

c: sound velocity
$\alpha$: expansion coefficient
t: gas temperature (°C)

Accordingly, the higher the gas temperature, the higher the sound velocity or the longer the wavelength, and the larger the required size of the silencer. Therefore, it is difficult to realize a small-sized silencer for high-temperature exhaust gas.

Further, even if a satisfactory sound absorbing effect is obtained at the outlet of the silencer, an unexpected noise may be generated, for example, a noise transmitted through the outer wall of the silencer, or a solid propagation noise propagated by vibration from the piping. They result in a lowering in the overall sound absorbing effect of the silencer.

To solve the above-described problems, the present invention provides a silencer with a water cooling jacket, comprising an inner cylinder having a pair of inlet and outlet pipes which define a gas passage, and an outer cylinder having a pair of inlet and outlet pipes which define a cooling water passage and surrounding the inner cylinder, wherein the gas passage and the cooling water passage are completely isolated from each other so as to prevent any leakage therebetween.

In the above-described arrangement, the cross-sections of the inner and outer cylinders may have any desired configuration, e.g., a circular or rectangular cross-sectional configuration. In addition, the inner cylinder may or may not be completely immersed in the outer cylinder.

By the arrangement of the present invention as described above, since both a sound absorbing effect and a gas cooling effect can be obtained with a silencer of a single structure, it is possible to make compact an apparatus for absorbing sound from and cooling a high-temperature exhaust gas.

In addition, in this invention, since a cooling jacket is provided around the silencer, a noise transmitted through the outer wall of the silencer or solid propagation noise due to the vibration is suppressed by the cooling water layer and the outer wall of the cooling jacket.

Further, since the sound velocity inside the silencer is slowed down by cooling of the gas and the wavelength of the sound becomes shorter, the size of the silencer can be reduced.

The above and other objects, features and advantages of the present invention will become more apparent from the following description when taken in conjunction with the accompanying drawings in which preferred embodiments of the present invention are shown by way of illustrative examples.

Fig. 1 is a sectional side view of one embodiment of the silencer according to the present invention;

Fig. 2 is a sectional view taken along the line A-A in Fig. 1;

Fig. 3 is a sectional side view of another embodiment of the silencer according to the present invention; and

Fig. 4 is a sectional view taken along the line B-B in Fig. 3.

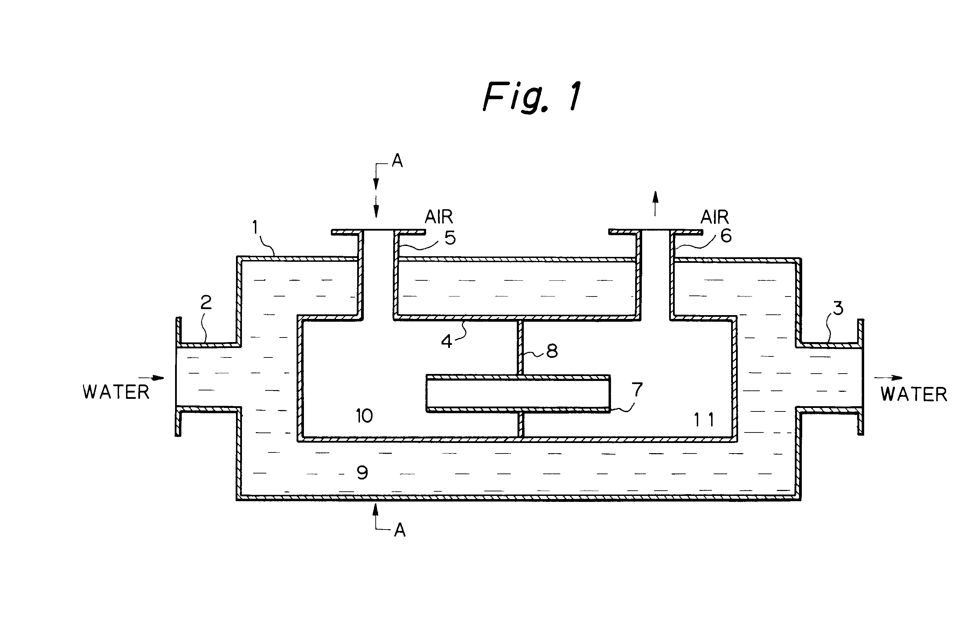

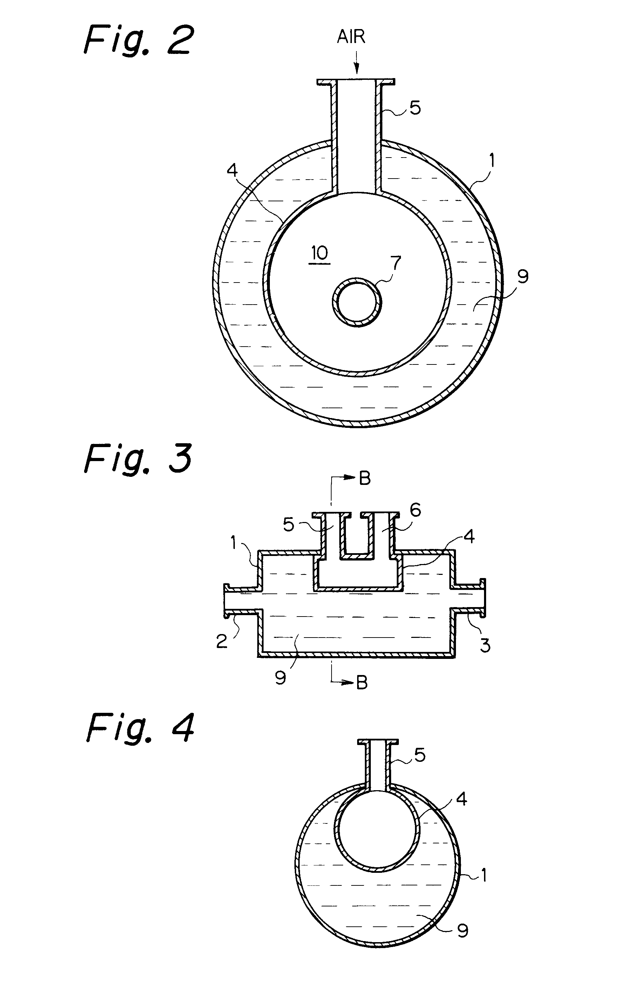

Fig. 1 is a sectional side view of one embodiment of the silencer according to the present invention, and Fig. 2 is a sectional view taken along the line A-A in Fig. 1. The silencer with the water cooling jacket of the present invention comprises an inner cylinder 4 having a sound absorbing effect, and an outer cylinder 1 which has a gas cooling effect and in which the inner cylinder 4 is completely immersed.

The inside of the inner cylinder 4 is divided into two chambers 10 and 11 by a partition plate 8. A communicating pipe 7 extends between the two chambers 10 and 11 to serve as a gas passage.

High-temperature exhaust gas flows into the first chamber 10 inside the inner cylinder 4 from a gas inlet pipe 5 and then enters the communicating pipe 7. At this time, a sound absorbing effect is obtained by the damping of energy caused by sudden reduction and expansion of the cross-sectional area of the gas passage. In other words, the embodiment functions as an expansion silencer. The gas further flows into the second chamber 11 inside the inner cylinder 4 and is then discharged from an outlet pipe 6. At this time, a sound absorbing effect is also obtained by sudden reduction and expansion of the cross-sectional area of the gas passage.

In the meantime, cooling water flows into a passage or space 9 defined between the outer and inner cylinders 1 and 4 from an inlet pipe 2. At this time, the cooling water contacts the outer surfaces of the inner cylinder 4 and the inlet and outlet pipes 5 and 6 to absorb heat from the high-temperature gas, passing through the insides of the inner cylinder 4 and the inlet and outlet pipes 5 and 6, through the outer walls thereof, thereby cooling the gas. The cooling water is raised in temperature by the heat absorbed from the high-temperature gas and is then discharged from an outlet pipe 3.

By virtue of the cooling effect, the sound velocity inside the silencer slows down, so that for the same frequency the wavelength becomes shorter than that before the cooling of the gas.

Although in the first embodiment described above the inner and outer cylinders 4 and 1 have a circular cross-sectional configuration, it should be noted that the cross-sectional configuration is not necessarily limited thereto and that any desired cross-sectional configuration may be employed, as stated above.

Fig. 3 is a sectional side view of another embodiment of the invention, and Fig. 4 is a sectional view taken along the line B-B in Fig. 3. Unlike the inner cylinder 4 in the first embodiment, the inner cylinder 4 in this embodiment is not completely immersed in the outer cylinder 1, but placed in contact with the outer cylinder 1, as illustrated. In Figs. 3 and 4, the same reference numerals as those in Figs. 1 and 2 denote the same constituent elements. In addition to the arrangement of the second embodiment, in which the outer and inner cylinders 1 and 4 are placed in contact with each other, another arrangement may be conceived in which a part of the inner cylinder 4 is exposed out of the outer cylinder 1. Even if the outer and inner cylinders are disposed in these ways, a sound absorbing and a gas cooling effect which are similar to those in the first embodiment can be obtained.

The silencer having a water cooled jacket of the present invention, arranged as described above, makes it possible to obtain both a sound absorbing effect and a high-temperature exhaust gas cooling effect with in an installation space required for a conventional silencer. Thus, the apparatus can be made more compact than in a case where the exhaust gas cooler and the silencer are installed separately.

Also, in the conventional silencer, even when the theoretical sound absorbing performance of the silencer itself is exhibited satisfactorily, the sound absorbing effect actually may become unsatisfactory as a whole due to generation of a secondary noise, i.e., a noise transmitted through the outer wall of the silencer, or a solid propagation noise propagated by vibration. However, the silencer of the present invention has a structure in which a cooling device is provided around the silencer, and it is therefore possible to obtain a noise insulation effect by the outer wall of the cooling device and a vibration damping effect by the cooling water layer. Thus, the structure of the present invention contributes to suppression of noise transmitted through the outer wall and the solid propagation noise.

In addition, the sound velocity inside the silencer is caused to slow down due to cooling of the gas, so that the wavelength of sound becomes shorter. Thus, it is possible to achieve a further reduction in the size of the silencer.

A compact silencer which enables both a sound absorbing effect and an exhaust gas cooling effect to be obtained within an installation space required for a conventional silencer and which can also suppress a noise transmitted through the outer wall and solid propagation noise, the silencer comprises an inner cylinder having a pair of inlet and outlet pipes which define a passage for high-temperature exhaust gas and including a sound absorbing structure in its internal structure, and an outer cylinder having a pair of inlet and outlet pipes which define a cooling water passage and surrounding the inner cylinder, wherein the gas passage and the cooling water passage are completely isolated from each other.

## Claims

1. A silencer with a water cooling jacket, comprising an inner cylinder having a pair of inlet and outlet pipes which define a gas passage and including a sound absorbing structure in its internal structure, and an outer cylinder having a pair of inlet and outlet pipes which define a cooling water passage surrounding said inner cylinder, wherein said gas passage and said cooling water passage are completely isolated from each other so as to prevent any leakage therebetween.

2. A silencer with a water cooling jacket according to Claim 1, wherein said inner cylinder is not completely immersed in said outer cylinder.

3. A silencer with a water cooling jacket according to Claim 1 or 2, wherein the cross-section of said inner and outer cylinders is circular or rectangular.

4. A silencer with a water cooling jacket according to Claim 1 or 2, wherein said sound absorbing structure comprises a plurality of chambers formed by dividing the inside of said inner cylinder by partition plates, and communicating pipes extending between said chambers.

EP 0 525 757 A1

## Fig. 1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-C-417 751 (LINKE-HOFMANN-LAUCHHAMMER) <br> * the whole document * <br> --- | 1-4 | F01N3/04 <br> F01N1/08 |
| X | DE-A-3 039 742 (MOTOREN-WERKE MANNHEIM) <br> * page 7, line 14 - page 10, line 11; figures 1-3 * <br> --- | 1-4 | |
| X <br> A | DE-A-2 909 530 (F. BOGDANSKI) <br> * the whole document * <br> --- | 1-3 <br> 4 | |
| X | US-A-1 936 698 (J. G. VINCENT) <br> * the whole document * <br> ----- | 1-3 | |
| | | | TECHNICAL FIELDS SEARCHED (Int. Cl.5 ) |
| | | | F01N |

The present search report has been drawn up for all claims

| Place of search | Date of completion of the search | Examiner |
|---|---|---|
| THE HAGUE | 19 NOVEMBER 1992 | HAKHVERDI M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)